# EUROPEAN PATENT APPLICATION

(11) **EP 4 428 352 A1**
(43) Date of publication of application: **11.09.2024**
(21) Application number: 23160457.0
(22) Date of filing: 07.03.2023
(51) Int. Cl.: F02D 37/02, F02D 41/00, F02D 41/02, B60K 28/16

(54) **METHOD OF OPERATING A DRIVE DEVICE FOR A MOTOR VEHICLE AND CORRESPONDING DRIVE DEVICE**

(71) Applicant: AUDI AG, 85057 Ingolstadt (DE); Seat, S.A., 08040 Barcelona (ES)
(72) Inventor: Poveda Rubiano, Daniel, 85055 Ingolstadt (DE); Longo, Orlando, 43007 Tarragona (ES); Diaz Martin, Ivan, 08004 Barcelona (ES)
(74) Representative: Dietz, Christopher Friedrich

(57) **Abstract**

The invention relates to a method for operating a drive device for a motor vehicle, wherein the drive device has a drive unit with an engine control unit and a preset torque to be provided by the drive unit can be set on the engine control unit. In this case, it is provided that, in a first operating mode, the engine control unit determines a correction factor from a first rotational speed of a first wheel axis of the motor vehicle, which is driven by means of the drive unit, and a second rotational speed of a second wheel axis of the motor vehicle, which is not driven by means of the drive unit, determines a setpoint torque from the preset torque and the correction factor, and actuates the drive unit at least temporarily to generate an actual torque corresponding to the setpoint torque. The invention further relates to a drive device for a motor vehicle.

## Description

The invention relates to a method for operating a drive device for a motor vehicle, wherein the drive device has a drive unit with an engine control unit and a preset torque to be provided by the drive unit can be set on the engine control unit. The invention further relates to a drive device for a motor vehicle.

For example, the patent application publication DE 10 2012 201 841 A1 is known from the prior art. This publication describes a method for preparing a defined starting procedure, which can be selected by the driver, of a motor vehicle with a starting element arranged between an engine and a transmission, in which, when maximum power is required by the driver and when the defined starting procedure is selected, the rotational speed or the torque of the engine is set to a predetermined value by means of an electronic control unit, the predetermined value being automatically determined by the electronic control unit as a function of a determined friction parameter, by means of which at least one relative statement can be made about the transmissible drive torque to be expected for the acceleration process, in such a way that the maximum possible drive torque for the best possible acceleration is achieved with a predetermined value during the subsequent starting acceleration process after the preparation. In this context, it is provided that the friction parameter is determined as a function of a state variable which is transmitted during a preceding defined start-up process and which influences the setting drive torque.

It is an objective of the invention to propose a method for operating a drive device for a motor vehicle which has advantages over known methods, in particular which implements the fastest possible acceleration of the motor vehicle, preferably a maximum acceleration of the motor vehicle, for example in the context of a launch control.

According to the invention, this is achieved with a method for operating a drive device for a motor vehicle having the features of claim 1. It is provided that the engine control unit, in a first operating mode, determines a correction factor from a first rotational speed of a first wheel axis of the motor vehicle, which is driven by means of the drive unit, and a second rotational speed of a second wheel axis of the motor vehicle, which is not driven by means of the drive unit, determines a setpoint torque from the preset torque and the correction factor and controls the drive unit at least temporarily to generate an actual torque corresponding to the setpoint torque.

Advantageous embodiments with expedient further embodiments of the invention are indicated in the dependent claims. It is pointed out that the examples of embodiments explained in the description are not restrictive; rather, any variations of the features disclosed in the description, the claims and the figures are realisable.

The method is used to operate the drive device. The drive device is preferably a component of the motor vehicle, but can of course also be separate from it. The drive device is provided and designed for driving the motor vehicle and in this respect serves to provide a drive torque directed towards driving the motor vehicle. The drive device has the drive unit for generating the drive torque. The drive unit is, for example, in the form of an internal combustion engine or an electric machine.

The drive unit is equipped with the engine control unit, on which the preset torque can be set or is set at least from time to time. The preset torque describes the torque that is to be provided by the drive unit. The preset torque is preset at least temporarily by a driver of the motor vehicle and/or a driver assistance device and is set on the engine control unit. For example, the preset torque is determined as a function of a setting of a control element, in particular an accelerator pedal. Preferably, the engine control unit controls the drive unit at least temporarily in such a way that an actual torque generated by the drive unit corresponds to the preset torque. The setting of the preset torque at the engine control unit is preferably carried out by a control unit that is different from the engine control unit, for example by a transmission control unit of a transmission, especially a gear change transmission. The control unit is also referred to below as the external control unit.

Especially with a high preset torque, wheel slip can occur on at least one wheel or at least one wheel axis of the motor vehicle. Normally, this wheel slip is detected by the external control unit and the preset torque is adjusted in such a way that the wheel slip is reduced. However, this can have the consequence that a preset torque is temporarily set on the engine control unit which cannot be implemented immediately, for example because the preset torque is outside a torque range within which the drive unit can be operated as intended. In particular, the preset torque cannot be set by adjusting the ignition timing, but an air charge of the drive unit must be changed in order to implement the preset torque. While the ignition timing can be adjusted very quickly, the adjustment of the air charge is more time-consuming, in particular the adjustment of the ignition timing can be reversed more quickly than the adjustment of the air charge.

For this reason, it is now provided that the engine control unit in the first operating mode determines the setpoint torque to be set on the drive unit itself from the preset torque. It is therefore preferably not provided that the external control unit adjusts the preset torque as a function of the wheel slip, but rather the preset torque is specified independently of the wheel slip. Alternatively, however, the external control unit can also evaluate the wheel slip, adjust the preset torque to reduce the wheel slip and set the preset torque adjusted in this way on the engine control unit.

In order to avoid wheel slip and at the same time operate the drive unit optimally, the engine control unit should determine the correction factor from the first rotational speed and the second rotational speed in the first operating mode. The correction factor is then used to determine the setpoint torque from the preset torque, in particular the setpoint torque results from multiplying the preset torque with the correction factor. Subsequently, the engine control unit controls the drive unit at least temporarily in such a way that the drive unit generates the actual torque which corresponds to the setpoint torque or in such a way that the actual torque generated by the drive unit at least changes in the direction of the setpoint torque.

The correction factor is selected in such a way that the wheel slip is reduced, in particular in the direction of a preset value, preferably down to the preset value. For this purpose, the first rotational speed and the second rotational speed are used to determine the correction factor, the first rotational speed being the rotational speed of a first wheel axis of the motor vehicle and the second rotational speed being the rotational speed of a second wheel axis of the motor vehicle. The first wheel axis is a wheel axis that can be driven or is driven by means of the drive unit and the second rotational speed is a wheel axis that is decoupled from the drive unit in terms of drive. The second wheel axis is therefore not driven by means of the drive unit. This means that it is not directly coupled to the drive unit in terms of drive, but at most indirectly via the first wheel axis and/or via a surface on which the motor vehicle is located. In other words, the second wheel axis is only indirectly connected to the drive unit via the first wheel axis.

The above-mentioned at least one wheel of the motor vehicle is assigned to the first wheel axis, i.e. is driven by means of the drive unit. At least one other wheel of the motor vehicle is assigned to the second wheel axis, i.e. is not driven by means of the drive unit. In principle, any number of wheels can be present on each of the wheel axes, for example, only one wheel can be arranged on each of the wheel axes. However, there can be several wheels, in particular two wheels, on at least one of the wheel axes or on both wheel axes.

The rotational speed of the respective wheel axis corresponds to the rotational speed of the wheel associated with the wheel axis. If there are several wheels on the corresponding wheel axis, the rotational speed can correspond to the rotational speed of one of the wheels or to a rotational speed determined from the rotational speeds of the several wheels, for example by averaging. The first rotational speed and the second rotational speed are preferably transmitted to the engine control unit by the external control unit, in particular the transmission control unit and/or a brake control unit.

The described procedure for the first operating mode makes it possible to reduce wheel slip while maintaining a high actual torque by taking the first rotational speed and the second rotational speed into account in the engine control unit. In particular, an unnecessary reduction of the preset torque and/or the actual torque is avoided, since the engine control unit always uses the highest possible actual torque to operate the drive unit. The described procedure is used in particular for a racing start of the motor vehicle, i.e. a start of the motor vehicle with the highest possible acceleration from standstill. The racing start is usually implemented by means of the launch control. However, the method can of course also be used profitably in other ways, namely always when wheel slip is to be reliably avoided despite a high preset torque.

A further embodiment of the invention provides that, in the first operating mode, the engine control unit determines a currently possible maximum torque and uses it as the preset torque, and/or that, in a second operating mode, the engine control unit uses the preset torque as the setpoint torque and controls the drive unit to generate the actual torque corresponding to the setpoint torque. In the first operating mode, the preset torque set on the engine control unit - optionally - is not used. Instead, the currently possible maximum torque is determined and used as the preset torque. This means that the setpoint torque is determined from the maximum torque and the correction factor.

The maximum torque corresponds to the maximum torque that can currently be provided by the drive unit. The maximum torque is determined in particular at least as a function of an instantaneous rotational speed of the drive unit, for example from a characteristic diagram in which the maximum torque is plotted against the rotational speed. However, at least one other variable can also be used to determine the maximum torque. The described procedure enables maximum acceleration of the motor vehicle with low wheel slip at the same time.

Additionally or alternatively, in the second operating mode, the preset torque set on the engine control unit is to be taken into account and used accordingly as the setpoint torque. In the second operating mode, the setpoint torque corresponds to the preset torque and the drive unit is also controlled by the engine control unit to generate the actual torque corresponding to the setpoint torque. However, at least the drive unit is controlled by the engine control unit in such a way that the actual torque changes in the direction of the setpoint torque and correspondingly in the direction of the preset torque. In the second operating mode, the preset torque is thus not determined by the engine control unit itself, but is specified to it by the external control unit.

The second operating mode is used during normal driving operation of the motor vehicle and ensures a high level of comfort for the driver. In the second operating mode, the drive unit is preferably operated in such a way that it provides the actual torque corresponding to the preset torque on the one hand and is operated as efficiently as possible on the other. The most efficient operation possible includes, in particular, the lowest possible fuel consumption and/or the lowest possible emissions and/or the smoothest possible running of the drive unit.

A further embodiment of the invention provides that when a first setting of at least one control element is present, the operating mode is changed to the first operating mode, and when a second setting of the at least one control element, which is different from the first setting, is present, the operating mode is changed from the first operating mode to the second operating mode. The current operating mode of the drive device is therefore selected and set from the first operating mode and the second operating mode depending on the setting of the control element. If the first setting of the control element is present, the first operating mode is used. If, on the other hand, the second setting is detected, the system switches from the first operating mode to the second operating mode.

The control element is, for example, an accelerator pedal, a brake pedal or the like. For example, several controls must have the first setting together in order to change to the first operating mode. If one of the controls is no longer in the first setting, the second setting is detected and the system switches from the first operating mode to the second operating mode. For example, the first operating mode is changed into if the driver of the motor vehicle first depresses the accelerator pedal and the brake pedal simultaneously and then releases the brake pedal but continues to depress the accelerator pedal. As soon as the driver no longer fully depresses the accelerator pedal but rather partially releases it, the system switches from the first operating mode to the second operating mode. This ensures flexible operation of the drive device.

A further embodiment of the invention provides that the drive unit is connected in terms of drive to the first wheel axis via a gear change transmission equipped with a transmission control unit, and the transmission control unit controls the gear change transmission for setting a driving gear selected from a plurality of driving gears as a function of a rotational speed of a transmission input shaft. In terms of drive technology, the gear change transmission is located between the drive unit and the first wheel axis. With the help of the gear change transmission, different driving gears and correspondingly different transmission ratios can be set between the drive unit and the first wheel axis.

The selection of the driving gear to be set from the several driving gears takes place depending on the rotational speed of the transmission input shaft. The transmission input shaft is, for example, rigidly coupled to the drive unit or it is connected to the drive unit via a launch element, in particular a launch clutch. In the former case, the launch element is preferably part of the gear change transmission. Preferably, the launch element is completely closed when the described method is carried out, so that the drive unit is rigidly or at least substantially rigidly coupled to the driven wheel axis via the gear-change transmission, in particular after launch, i.e. after the motor vehicle has reached a certain speed. A gearbox output shaft of the gear change gearbox is drive-connected to the first wheel axis, in particular rigidly and/or permanently.

For example, the transmission control unit is connected to the control element and evaluates its position. This means that the transmission control unit determines the preset torque from the position of the control element and sets it on the engine control unit, at least in the second operating mode. In addition, the transmission control unit selects the gear to be set and controls the gear change transmission to set the selected gear. In the first operating mode, on the other hand, the transmission control unit only serves to control the gear change transmission to set the respective selected gear. The preset torque is preferably determined by the engine control unit itself in the first operating mode, in particular it corresponds to the maximum torque. This ensures flexible operation of the motor vehicle or the drive device.

A further embodiment of the invention provides that, in the second operating mode, the transmission control unit determines the preset torque as a function of a setting of the at least one operating element and sets it at the engine control unit. This has already been pointed out. In the second operating mode, the transmission control unit evaluates the setting of the control element and determines the preset torque from the setting. This preset torque is then set on the engine control unit. In the second operating mode, the engine control unit preferably controls the drive unit in such a way that the actual torque provided by the drive unit corresponds to the preset torque. This also serves to ensure flexible operation of the drive device.

A further embodiment of the invention provides that the correction factor is determined at least on the basis of a rotational speed difference between the first rotational speed and the second rotational speed. Since the first wheel axis is driven by means of the drive unit, whereas this is not the case for the second wheel axis, the first rotational speed in the first operating mode will usually or at least temporarily be greater than the second rotational speed. The rotational speed difference is obtained by subtracting the second rotational speed from the first rotational speed and is a measure of the wheel slip on the first wheel axis or of the wheel slip of the least one wheel on the first wheel axis. Accordingly, the rotational speed difference is particularly suitable for determining the correction factor.

A further embodiment of the invention provides that the correction factor is additionally determined on the basis of the first rotational speed and/or the second rotational speed. In addition to the rotational speed difference, the first rotational speed or the second rotational speed is also directly included in the determination of the correction factor. Usually, the greater the speed of the motor vehicle and consequently the greater the first rotational speed and/or the second rotational speed, the less pronounced the wheel slip. Preferably, the greater the first rotational speed or the second rotational speed, the greater the correction factor is selected. Preferably, only the second rotational speed, but not the first rotational speed, is used in addition to the rotational speed difference. This corresponds with high accuracy to the speed of the motor vehicle and can therefore be used to precisely determine the correction factor.

Particularly preferably, the correction factor is determined using the rotational speed difference and the second rotational speed, so that the correction factor is a function of the rotational speed difference and the second rotational speed. For example, the greater the rotational speed difference, the smaller the correction factor. On the other hand, the greater the second rotational speed, the greater the correction factor. Preferably, the correction factor is always between 0 and 1.

A further embodiment of the invention provides that the correction factor is determined by means of a mathematical relationship, a characteristic diagram or a table. Here, at least the rotational speed difference serves as the input variable; in addition, the first rotational speed and/or the second rotational speed can be used as input variables. The correction factor is the output variable. The mathematical relationship, the characteristic diagram or the table is preferably parameterised ex works. During operation of the motor vehicle, they are unchangeable, i.e. no adjustments are made to them. By means of the mathematical relationship, the characteristic diagram or the table, a value of the correction factor is assigned to each value of the rotational speed difference and/or to each value of the first rotational speed and/or to each value of the second rotational speed. The described procedure enables a particularly efficient determination of the correction factor in order to reliably avoid wheel slip even when the motor vehicle is accelerating strongly.

A further embodiment of the invention provides that, in the first operating mode, the drive unit is operated with an air charge which is greater than an air charge required to achieve the setpoint torque and the actual torque is set to the setpoint torque by correspondingly setting an ignition timing, and/or that, in the second operating mode, the drive unit is operated with that air charge which corresponds to the air charge required to achieve the setpoint torque. In the first operating mode, the drive unit is pre-tensioned in order to be able to increase the actual torque as quickly as possible. For this purpose, it is operated with the larger air charge, i.e. the air charge that is larger than the air charge actually required to achieve the setpoint torque.

The air charge is selected in such a way that the actual torque can be increased at a constant air charge simply by adjusting the ignition timing. In addition, the air charge is selected in such a way that the maximum torque is increased. In order to keep the actual torque at the setpoint torque and not to increase it beyond this, the ignition timing is adjusted. The ignition timing is set in such a way that the actual torque corresponds to the setpoint torque despite the increased air charge. This procedure increases the torque that can be provided by the drive unit or extends an upper combustion limit of the drive unit.

In addition or alternatively, the drive unit is operated in the second operating mode with the air charge that corresponds to the air charge required to achieve the setpoint torque. In the second operating mode, for example, the ignition timing is selected in such a way that the most efficient operation of the drive unit is ensured. This is characterised, for example, by the lowest possible fuel consumption, smooth running and/or low emissions. The air charge is set in such a way that with this ignition timing the actual torque provided by the drive unit corresponds to the setpoint torque or the preset torque. With the described procedure, on the one hand, rapid acceleration of the motor vehicle is achieved in the first operating mode and, on the other hand, a high level of comfort, low fuel consumption and low emissions are ensured in the second operating mode.

A further embodiment of the invention provides that, in the first operating mode, a minimum torque which can be achieved by setting the ignition timing during intended operation of the drive unit is determined on the basis of the air charge and, if the actual torque is smaller than the minimum torque, the drive unit is controlled further to generate the actual torque corresponding to the setpoint torque until an undershoot value determined from the actual torque reaches a threshold value. In the first operating mode, the minimum torque is determined for the set air charge, which is minimally achievable with the set air charge by adjusting the ignition timing while simultaneously operating the drive unit as intended. Operation as intended means in particular that the drive unit is operated without misfiring and/or provides a positive drive torque for driving the motor vehicle.

The minimum torque is present at a lower combustion limit of the drive unit. Normally, falling below the minimum torque is to be prevented by the actual torque, so that when the minimum torque is reached by the actual torque, the air charge is adjusted so that the actual torque always corresponds at least to the minimum torque achievable for the current air charge. However, such a procedure prevents a subsequent rapid increase in the actual torque.

For this reason, the actual torque should temporarily be allowed to fall below the minimum torque in order to utilise a torque potential reserve. As soon as the actual torque falls below the minimum torque, the drive unit should continue to be controlled to generate the actual torque corresponding to the setpoint torque, especially if the air charge remains constant. In addition, as soon as the actual torque falls below the minimum torque, the undershoot value is determined from the actual torque.

Only when the undershoot value reaches the threshold value is the actual torque adjusted in the direction of the minimum torque or until reaching the minimum torque, in particular by changing the air charge. Conversely, this means that even if the actual torque falls below the minimum torque, the actual torque continues to be held at the setpoint torque, namely without changing the air charge, until the undershoot value reaches the threshold value. This allows the minimum torque to be undershot at least for a short time and enables the actual torque to be increased quickly.

A further embodiment of the invention provides that in the first operating mode, when the undershoot value reaches the threshold value, the drive unit is controlled to generate an actual torque that deviates from the setpoint torque and is adjusted in the direction of the minimum torque, in particular until the setpoint torque at least corresponds to the minimum torque. Thus, if the undershoot value reaches the threshold value in the first operating mode, the drive unit is controlled in such a way that the actual torque deviates from the setpoint torque. In this case, the actual torque is adjusted in the direction of the minimum torque so that the actual torque is greater than the setpoint torque.

The adjustment of the actual torque is preferably carried out until the setpoint torque is equal to or greater than the minimum torque. The generation of the actual torque deviating from the setpoint torque is achieved in particular by changing the air charge. In addition, it can be provided to adjust the ignition timing, in particular to adjust it in the early direction. This ensures reliable operation of the drive unit. Deterioration of emissions as well as high component loads in the exhaust tract due to injection blanking are effectively avoided in the described manner.

A further embodiment of the invention provides that the undershoot value is determined from a difference between the minimum torque and the actual torque, in particular as an integral over time. The undershoot value is a function of the difference calculated from the minimum torque and the actual torque. Preferably, the difference results from a subtraction of the actual torque from the minimum torque. Particularly preferably, this difference is integrated or summed up over time. This means that the undershoot value becomes larger the longer and the more clearly the actual torque is smaller than the minimum torque. In this way, the extent of the undershoot is very well represented and negative influences on the operation of the drive unit due to the undershooting of the minimum torque by the actual torque are reliably avoided.

A further embodiment of the invention provides that the undershoot value is reset to an initial value when the actual torque has reached or exceeded the minimum torque, in particular with a time delay. In order to allow further undershoot after the actual torque has fallen below the minimum torque and the actual torque has subsequently reached or exceeded the minimum torque, the undershoot value is reset to the initial value under the said conditions. The initial value represents a start value for the undershoot value, for example it is zero.

It can be provided that the reset is carried out immediately when the actual torque reaches or exceeds the minimum torque. However, it is particularly preferred that it is carried out with a time delay in order to reduce any remaining negative influences of falling below the minimum torque. The time-delayed reset is carried out, for example, after a fixed period of time or after a period of time that is selected as a function of the undershoot value. In particular, the longer the undershoot value, the longer the time period.

Alternatively, however, it can also be provided that the difference between the minimum torque and the actual torque is determined continuously, in particular as an integral or sum over time. The undershoot value is determined in such a way that it is always at least zero. During the undershoot, the undershoot value therefore increases. Conversely, it becomes smaller as long as the actual torque is greater than the minimum torque. Accordingly, there is no explicit resetting of the undershoot value to the initial value, but the undershoot value reflects the state of the drive unit at all times.

If the undershoot value is greater than the threshold value, the actual torque is adjusted in the direction of the minimum torque, in particular to it, deviating from the setpoint torque. A renewed undershoot of the minimum torque by the actual torque is only permitted as soon as the undershoot value is again smaller than the threshold value or a further threshold value. The further threshold value is preferably different from the threshold value, in particular it is smaller. Preferably, the further threshold value is equal to zero. Such an approach takes particularly good account of the extent to which the minimum torque is undershot.

The invention further relates to a drive device for a motor vehicle, in particular for carrying out the method according to the explanations within the scope of this description, wherein the drive device has a drive unit with an engine control unit and a preset torque to be provided by the drive unit can be set at the engine control unit. In this case, the engine control unit is provided and designed to determine, in a first operating mode, a correction factor from a first rotational speed of a first wheel axis of the motor vehicle, which is driven by means of the drive unit, and a second rotational speed of a second wheel axis of the motor vehicle, which is not driven by means of the drive unit, to determine a setpoint torque from the preset torque and the correction factor and to control the drive unit at least temporarily to generate an actual torque corresponding to the setpoint torque.

The advantages of such a design of the drive device or such a procedure have already been discussed. Both the drive device and the method for operating it can be further developed in accordance with the explanations within the scope of this description, so that reference is made to this extent.

The features and combinations of features described in the description, in particular the features and combinations of features described in the following description of figures and/or shown in the figures, can be used not only in the combination indicated in each case, but also in other combinations or on their own, without leaving the scope of the invention. Thus, embodiments which are not explicitly shown or explained in the description and/or the figures, but which result from the explained embodiments or can be derived from them, are also to be regarded as encompassed by the invention.

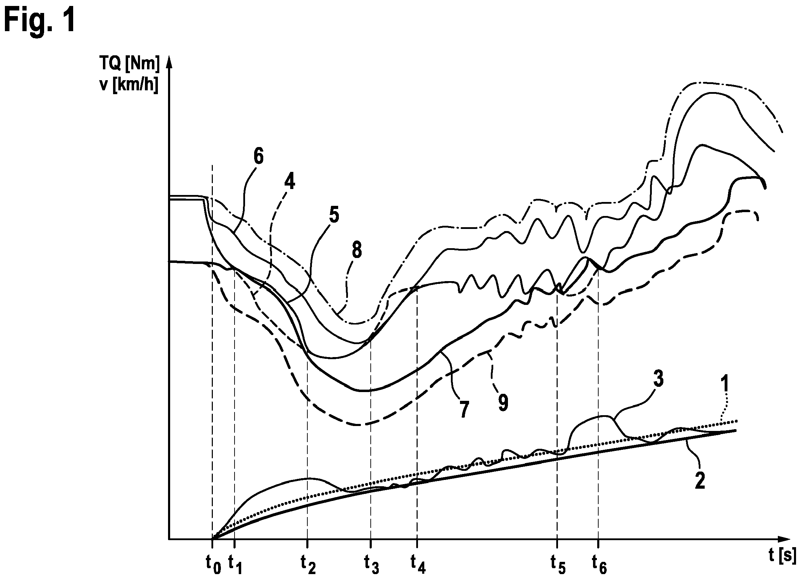

The invention is explained in more detail below with reference to the embodiments shown in the drawing, without any limitation of the invention. Thereby the only
- Figure 1: shows a diagram in which a plurality of torque curves and a plurality of speed curves for a drive device of a motor vehicle are plotted over time.

Figure 1 shows a diagram in which curves 1, 2 and 3 show different speeds over time. Curve 1 shows a theoretically possible curve of the speed of a non-driven wheel axis of a motor vehicle over time. Curve 2, on the other hand, shows an actual curve of the speed of the non-driven wheel axis and curve 3 shows a speed of a wheel axis driven by means of a drive unit of a drive device. It can be seen that curve 2 increases steadily and continuously and is similar to curve 1. The speed of the driven wheel axis according to curve 3, on the other hand, fluctuates, in particular due to changing propulsion conditions of the motor vehicle, in particular due to changing wheel slip on the driven wheel axis.

Furthermore, curves 4, 5, 6, 7, 8 and 9 are shown in the diagram. These each show a torque over time. Curve 4 describes a setpoint torque and curve 5 an actual torque generated by the drive unit. Curve 6 shows an upper combustion limit and curve 7 a lower combustion limit. Curves 8 and 9 also show an extended upper combustion limit and an extended lower combustion limit. The speed curves 2 and 3 result from driving the motor vehicle on a wheel axis with the actual torque shown in curve 5.

It can be seen that the acceleration of the motor vehicle begins at a point in time t₀. In order to limit wheel slip on the driven wheel axis, the actual torque is first reduced. At a time t₁, the actual torque reaches the torque of the lower combustion limit. The actual torque therefore does not run according to the setpoint torque of curve 4, but instead along curve 7 in order to maintain the lower combustion limit. To do this, it is necessary to reduce the air charge of the drive unit, which in turn affects the maximum torque that can be achieved.

In order to avoid the reduction of the maximum torque, it is provided to allow the actual torque of the curve 5 to fall below the lower combustion limit according to the curve 7, so that the curve 5 - unlike shown here - runs along the curve 4. As long as the actual torque falls below the minimum torque, an undershoot value is determined, namely from the difference between the minimum torque and the actual torque. In particular, this difference is integrated or summed up over time. The undershoot of the minimum torque by the actual torque is permitted as long as the undershoot value is smaller than a threshold value.

If, on the other hand, the undershoot value reaches the threshold value, the actual torque is adjusted in the direction of the minimum torque, in particular in such a way that it corresponds to the minimum torque. Thus, the actual torque is not allowed to fall below the minimum torque for any length of time, but rather the extent of this falling below is checked and terminated when a permissible extent is exceeded. This measure allows the actual torque to be reduced to the torque of curve 9, at least for a short time. The curve 9 indicates the extended lower combustion limit that can be achieved by falling below the minimum torque. In the example shown here, the setpoint torque reaches the lower combustion limit at time t₂. Subsequently, the actual torque at least temporarily returns to the setpoint torque.

At a time t₃, the setpoint torque exceeds the torque of the upper combustion limit according to curve 6. Normally, here again the actual torque would have to be limited to the torque of the upper combustion limit, so that it is lower than the setpoint torque. This is shown between time t₃ and time t₄ in the diagram. Preferably, however, it is provided to increase the air charge of the drive unit such that a maximum torque of the drive unit is increased to the curve 8. This means that also in the period between t₃ and t₄ the actual torque - contrary to the representation in the diagram - corresponds to the setpoint torque. A further undershooting of the torque of the lower combustion limit according to curve 7 is indicated between times t₅ and te. Here, too, the actual torque can correspond continuously to the setpoint torque due to the reduction of the minimum torque to curve 9. With the help of the described procedure, a particularly high acceleration of the motor vehicle is achieved.

### LIST OF REFERENCE SIGNS:

- 1: Curve
- 2: Curve
- 3: Curve
- 4: Curve
- 5: Curve
- 6: Curve
- 7: Curve
- 8: Curve
- 9: Curve

## Claims

1. Method for operating a drive device for a motor vehicle, wherein the drive device has a drive unit with an engine control unit and a preset torque to be provided by the drive unit can be set at the engine control unit, **characterized in that,** in a first operating mode, the engine control unit determines a correction factor from a first rotational speed of a first wheel axis of the motor vehicle, which is driven by means of the drive unit, and from a second rotational speed of a second wheel axis of the motor vehicle, which is not driven by means of the drive unit, determines a setpoint torque from the preset torque and the correction factor, and actuates the drive unit at least temporarily in order to generate an actual torque which corresponds to the setpoint torque.

2. Method according to claim 1, **characterized in that,** in the first operating mode, the engine control unit determines a currently possible maximum torque and uses it as the preset torque, and/or **in that**, in a second operating mode, the engine control unit uses the preset torque as the setpoint torque and controls the drive unit to generate the actual torque corresponding to the setpoint torque.

3. Method according to one of the preceding claims, **characterised in that** when a first setting of at least one operating element is present, the operating mode is changed to the first operating mode, and when a second setting of the at least one operating element, which is different from the first setting, is present, the operating mode is changed from the first operating mode to the second operating mode.

4. Method according to one of the preceding claims, **characterized in that** the correction factor is determined at least on the basis of a rotational speed difference between the first rotational speed and the second rotational speed.

5. Method according to one of the preceding claims, **characterised in that** the correction factor is additionally determined on the basis of the first rotational speed and/or the second rotational speed.

6. Method according to one of the preceding claims, **characterised in that,** in the first operating mode, the drive unit is operated with an air charge which is greater than an air charge required to achieve the setpoint torque and the actual torque is set to the setpoint torque by correspondingly setting an ignition timing, and/or **in that**, in the second operating mode, the drive unit is operated with that air charge which corresponds to the air charge required to achieve the setpoint torque.

7. Method according to one of the preceding claims, **characterised in that,** in the first operating mode, a minimum torque which can be achieved by setting the ignition timing during intended operation of the drive unit is determined on the basis of the air charge and, if the actual torque is smaller than the minimum torque, the drive unit is controlled further to generate the actual torque corresponding to the setpoint torque until an undershoot value determined from the actual torque reaches a threshold value.

8. Method according to one of the preceding claims, **characterised in that** in the first operating mode, when the undershoot value reaches the threshold value, the drive unit is activated to generate an actual torque which deviates from the setpoint torque and is adapted in the direction of the minimum torque.

9. Method according to one of the preceding claims, **characterised in that** the undershoot value is determined from a difference between the minimum torque and the actual torque.

10. Drive device for a motor vehicle, in particular for carrying out the method according to any one of the claims 1 to 9, wherein the drive device has a drive unit with an engine control unit and a preset torque to be provided by the drive unit can be set at the engine control unit, **characterised in that** the engine control unit is provided and designed to determine, in a first operating mode, a correction factor from a first rotational speed of a first wheel axis of the motor vehicle, which is driven by means of the drive unit, and from a second rotational speed of a second wheel axis of the motor vehicle, which is not driven by means of the drive unit, to determine a setpoint torque from the preset torque and the correction factor and to control the drive unit at least temporarily to generate an actual torque corresponding to the setpoint torque.
